# EUROPÄISCHE PATENTANMELDUNG

(11) **EP 1 538 478 A1**
(43) Veröffentlichungstag der Anmeldung: **08.06.2005**
(21) Anmeldenummer: 04027942.4
(22) Anmeldetag: 25.11.2004
(51) Int. Cl.: G02C 5/22

(54) **Brille**

(30) Priorität: 01.12.2003 DE 10356038
(71) Anmelder: Uvex Arbeitsschutz GmbH & Co KG, 90766 Fürth/Bay. (DE)
(72) Erfinder: Brück, Stefan, 90419 Nürnberg (DE)
(74) Vertreter: Schneck, Herbert, Dipl.-Phys., Dr.

(57) **Zusammenfassung**

Bei einer Brille umfassend wenigstens eine Scheibe und zwei Bügel, die mit der Scheibe bzw. einem der Scheibe zugeordneten Rahmen um eine im wesentlichen horizontale Schwenkachse um ca. 180° zur Innenseite der Scheibe hin einschwenkbar sind, ist vorgesehen, dass eine Inklinationseinrichtung (8, 9, 10) vorgesehen ist, um im Gebrauchszustand der Bügel (2) deren Winkelposition relativ zur Scheibe (3) endlagenstabil einstellbar zu machen.

## Beschreibung

Die Erfindung richtet sich auf eine Brille, umfassend wenigstens eine Scheibe und zwei Bügel, die mit der Scheibe bzw. einem der Scheibe zugeordneten Rahmen um eine im wesentlichen horizontale Schwenkachse um ca. 180° zur Innenseite der Scheibe hin einschwenkbar sind.

Eine derartige Brille ist beispielsweise bekannt aus EP 02 708 295, FR-A-2 751 431 oder GB 2 168 499 A1. Aus US 5 457 505 und US 6 332 681 sind herkömmliche Brillen mit Inklinationsanordnungen bekannt.

Die meisten Brillen weisen für die Bügel Schwenkgelenke mit einer vertikalen Schwenkachse auf, so dass die Bügel zum Aufbewahren um diese vertikale Schwenkachse nach innen geklappt werden können.

Insbesondere bei Brillen mit einer einzigen durchgehenden Scheibe, welche sich relativ stark gekrümmt über einen großen Winkelbereich erstreckt, sind aus den vorstehend genannten Veröffentlichungen Lösungen mit einer horizontalen Schwenkachse bekannt. In der Regel weisen dabei die Bügel eine Krümmung auf, welche etwa der Scheibenkrümmung entspricht, so dass sie im eingeschwenkten Zustand der Scheibenkrümmung folgen.

Ein gravierender Nachteil der vorbekannten Konstruktionen liegt darin, dass die Winkelposition der Bügel relativ zur Scheibe zumindestens in Einschwenkrichtung ungewollt verstellt werden kann, bzw. nicht einstellbar ist.

Hiervon ausgehend liegt der Erfindung die Aufgabe zugrunde, eine Brille der eingangs genannten Art so auszugestalten, dass der Tragekomfort verbessert wird.

Diese Aufgabe wird erfindungsgemäß dadurch gelöst, dass eine Inklinationseinrichtung vorgesehen ist, um im Gebrauchszustand der Bügel deren Winkelposition relativ zur Scheibe endlagenstabil einstellbar zu machen, wobei die Inklinationseinrichtung durch eine konzentrisch zur Schwenkachse jedes Bügels verlaufende Rippenanordnung und einen hiermit zusammenwirkenden Rastvorsprung gebildet ist, und wobei der Rastvorsprung an der Unterseite eines oberen Rahmenteils angeordnet ist, welches nach innen wenigstens abschnittsweise vorsteht.

Hierdurch kann sich jeder Benutzer die Neigung der Bügel relativ zur Scheibe so einstellen, wie er es als bequem empfindet und gleichzeitig wird ein ungewolltes Verschwenken der Bügel relativ zur Scheibe verhindert. Dabei wird insgesamt eine einfache und kostengünstig realisierbare und gleichwohl ästhetisch ansprechende Konstruktion erreicht. Außerhalb des Winkelbereichs, über den sich die Rippenanordnung erstreckt, steht der Rastvorsprung nicht in Eingriff.

Die Rippenanordnung erstreckt sich demnach über einen Winkelbereich von bis zu 45°, d.h. dem üblichen Einstellbereich für die Neigung der Bügel, wobei die Bügel bei einem Einschwenken über diesen Winkelbereich hinaus sich ohne Widerstand einschwenken lassen.

Nachfolgend wird die Erfindung anhand eines bevorzugten Ausführungsbeispiels in Verbindung mit der Zeichnung näher erläutert.

Dabei zeigt:

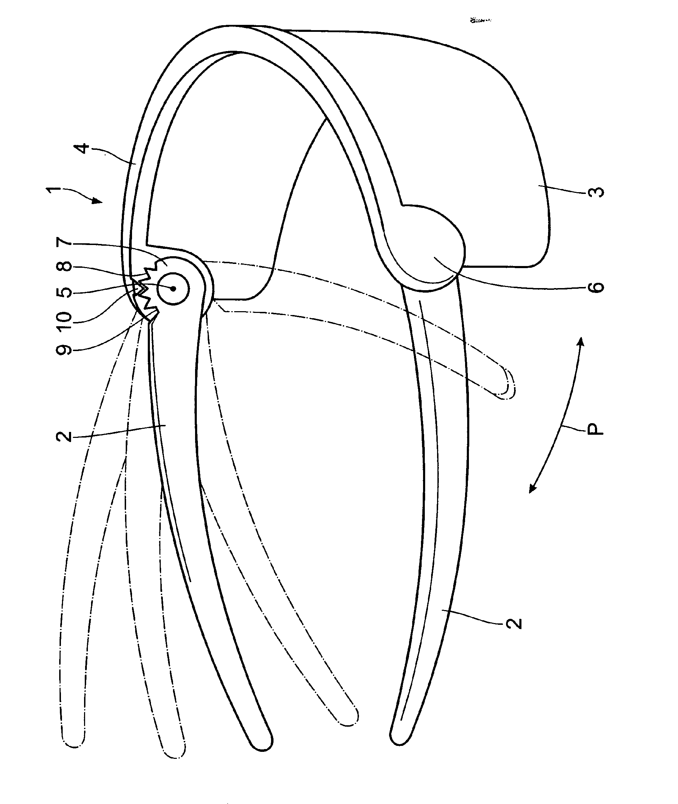

- Fig. 1: eine perspektivische Darstellung einer erfindungsgemäßen Brille,

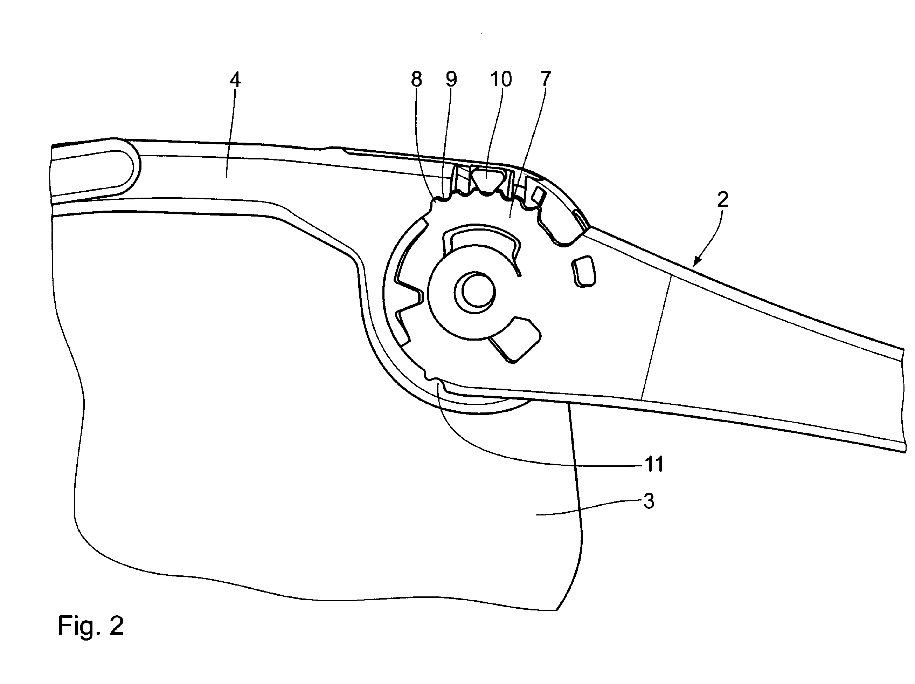

- Fig. 2: eine vergrößerte Darstellung der Inklinationseinrichtung.

Eine in der Zeichnung dargestellte Brille 1 umfasst zwei Bügel 2, welche an einem eine Scheibe 3 tragenden oberen Rahmenteil 4 um eine im wesentlichen horizontale Schwenkachse 5 in Richtung des Pfeils P um 180° nach innen einschwenkbar sind, so dass sie im eingeschwenkten Zustand im wesentlichen der Krümmung der Scheibe 3 folgen. Die Schwenkachsen 5 liegen im Ausführungsbeispiel im Bereich von Verdickungen 6 an den äußeren Enden des oberen Rahmenteils 4.

Die inneren Enden 7 der Bügel 2 weisen an ihrer Oberseite eine Mehrzahl von Rippen 8 auf, wobei zwischen jeweils zwei derartigen Rippen 8 eine Nut 9 ausgebildet ist.

Im Bereich der Oberkante des oberen Rahmenteils 4 erstreckt sich ein Rastvorsprung 10 nach unten, der mit den Nuten 9 derart zusammenwirkt, dass beim Verschwenken des Bügels 2 der Rastvorsprung 10 nacheinander in die Nuten 9 einrastet, wobei es auf diese Weise möglich ist, eine bestimmte Winkelstellung der Bügel 2 relativ zu dem oberen Rahmenteil 4 und damit relativ zur Scheibe 3 einzustellen.

Der Rastvorsprung 10 ist beidseitig freigestellt, das heißt es sind dort Ausnehmungen beim Übergang zum oberen Rahmenteil 4 vorgesehen, wodurch die Elastizitäts- bzw. Rasteigenschaften verbessert werden.

Den Nuten 9 gegenüberliegend ist eine weitere Nut 11 vorgesehen, in welche der Rastvorsprung 10 einrastet, wenn die Bügel vollständig nach innen eingeschwenkt sind, um sie in dieser Position zu arretieren.

## Patentansprüche

1. Brille umfassend wenigstens eine Scheibe und zwei Bügel, die mit der Scheibe bzw. einem der Scheibe zugeordneten Rahmen um eine im wesentlichen horizontale Schwenkachse um ca. 180° zur Innenseite der Scheibe hin einschwenkbar sind, **dadurch gekennzeichnet, dass** eine Inklinationseinrichtung (8, 9, 10) vorgesehen ist, um im Gebrauchszustand der Bügel (2) deren Winkelposition relativ zur Scheibe (3) endlagenstabil einstellbar zu machen.

2. Brille nach Anspruch 1, **dadurch gekennzeichnet, dass** die Inklinationseinrichtung (8, 9, 10) durch eine konzentrisch zur Schwenkachse (5) jedes Bügels (2) verlaufende Rippenanordnung (8, 9) und einen hiermit zusammenwirkenden Rastvorsprung (10) gebildet ist.

3. Brille nach Anspruch 1, **dadurch gekennzeichnet, dass** der Rastvorsprung (10) an einem oberen Rahmenteil (4) angeordnet ist.

4. Brille nach Anspruch 2, **dadurch gekennzeichnet, dass** die Rippenanordnung (8, 9) an der Oberseite jedes Bügels (2) ausgebildet ist.

5. Brille nach Anspruch 4, **dadurch gekennzeichnet, dass** die Rippenanordnung (8, 9) sich über einen Umfangswinkelbereich von bis zu 45° erstreckt.
